# EUROPEAN PATENT APPLICATION

(11) **EP 2 371 538 A2**
(43) Date of publication of application: **05.10.2011**
(21) Application number: 09833580.5
(22) Date of filing: 13.11.2009
(51) Int. Cl.: B32B 27/00, B32B 7/12, G09F 19/00

(54) **BIODEGRADABLE MATERIAL FOR AN ADVERTISEMENT, AND METHOD FOR PREPARING SAME**

(30) Priority: 17.12.2008 KR 20080128694
(71) Applicant: LG Hausys, Ltd., Seoul 135-721 (KR)
(72) Inventor: HONG, Sun Kil, Cheongju-si Chungcheongbuk-do 360-781 (KR); LEE, Jong Cheol, Cheongju-si Chungcheongbuk-do 361-280 (KR); NAM, Youn Woo, Cheongju-si Chungcheongbuk-do 361-796 (KR)
(74) Representative: Plougmann & Vingtoft A/S
(86) International application number: PCT/KR2009/006685
(87) International publication number: WO 2010/071302

(57) **Abstract**

Disclosed are a material for advertisement and a method for manufacturing the same. The material for advertisement includes a surface film layer, a pressure-sensitive adhesive layer and a release layer stacked in sequence, in which the surface film layer is composed of a biodegradable film layer containing 5 to 40 wt% of a biodegradable polymer and 95 to 60 wt% of an aliphatic polyester. The material including the biodegradable film layer can be used for print advertisement to be discarded after being used for a short period of time, and has biodegradability of 60% or more as compared with cellulose within six months when discarded, so that a toxic environmental hormone due to polyvinylchloride (PVC) is not emitted, and the environment is protected, thereby being very friendly toward humans and the earth.

## Description

### [Technical Field]

The present invention relates to a biodegradable material for advertisement that has surface printability for print advertisements, excellent adhesion to various objects and workability, and naturally decomposes when buried, and a method for manufacturing the same. More particularly, the present invention relates to a biodegradable material for advertisement that includes a biodegradable film layer formed of a biodegradable material comprising a poly(lactic acid) polymer and aliphatic polyester, a pressure-sensitive adhesive layer to be bonded to an object, and a release layer for protecting the pressure-sensitive adhesive layer, and a method for manufacturing the same.

### [Background Art]

Most surface materials for a pressure-sensitive adhesive film used for materials for indoor/outdoor advertisement are polyvinylchloride (PVC), which employs plasticizers such as dioctyl phthalate (DOP) for flexibility of the film. Since a pressure-sensitive adhesive film containing the plasticizer emits harmful substances such as hydrogen chloride, dioxin, etc. when incinerated, use of polyvinylchloride (PVC) has recently been restricted in developed nations. Accordingly, various challenges have been made by manufacturers to develop alternative materials. Further, since it takes a long period of time for these materials to decompose when buried, there are problems of environmental pollution.

To solve these problems, there has been an attempt to use olefin resins, such as polyethylene and polypropylene, as replacement for the existing materials. However, the olefin resin has poor adhesion to a surface treatment agent for imparting printability, and has difficulty in attaining biodegradability which allows the material composed of the olefin resin to be completely decomposed into water and carbon dioxide as quickly as possible and to be harmless to humans without pollution.

Further, other materials have been developed by mixing a polymer, such as polyvinylchloride, polyethylene, polypropylene and polystyrene, with a biodegradable resin such as starch, polycaprolactone (PCL), poly(lactic acid) (PLA), etc. However, although the biodegradable resin can be decomposed by microorganisms, it takes a significantly long period of time for the synthetic polymers such as polyvinylchloride and polyethylene to decompose and produces by products.

Therefore, the biodegradable plastics partially mixed with the biodegradable resin are not a perfect solution in light of environmental conservation, and there is a need to develop a new material capable of replacing such existing material.

### [Disclosure]

### [Technical Problem]

Therefore, the present invention is directed to solving the problems of the related art as described above, and an aspect of the present invention is to provide a biodegradable material for advertisement that has surface printability for digital and silkscreen printing, excellent adhesion to various objects and workability, and is biodegradable when buried.

Another aspect of the present invention is to provide a method for manufacturing an environmentally friendly biodegradable material for advertisement having the characteristics as described above.

### [Technical Solution]

In accordance with an aspect of the invention, a biodegradable material for advertisement includes a surface film layer, a pressure-sensitive adhesive layer, and a release layer stacked in sequence, in which the surface film layer is composed of a biodegradable film layer containing 5 to 40 percent by weight (wt%) of a biodegradable polymer and 95 to 60wt% of an aliphatic polyester.

### [Advantageous Effects]

According to exemplary embodiments of the invention, a material for print advertisement is used for indoor/outdoor advertising materials and includes a surface film layer composed of a biodegradable polymer film layer so as to be discarded after being used for a short period of time. Further, the material for advertisement has biodegradability of 60% or more as compared with cellulose within six months when discarded, so that a toxic environmental hormone due to polyvinylchloride (PVC) is not emitted and the environment is protected, thereby being very friendly to humans and the earth.

### [Description of Drawings]

Fig. 1 is a cross-sectional view of a biodegradable material for advertisement according to an exemplary embodiment of the present invention.
Fig. 2 is a cross-sectional view of a biodegradable material for advertisement including a surface treatment layer in Fig. 1.
Fig. 3 is a cross-sectional view of a biodegradable material for advertisement including two or more biodegradable film layers in Fig. 1.
Fig. 4 is a cross-sectional view of a biodegradable material for advertisement including two or more biodegradable film layers in Fig. 2.

### [Best Mode]

According to one aspect of the present invention, a biodegradable material for advertisement includes a surface film layer/a pressure-sensitive adhesive layer/a release layer stacked in sequence, in which the surface film layer is composed of a biodegradable film layer containing 5 to 40 wt% of a poly(lactic acid) polymer and 95 to 60 wt% of an aliphatic polyester.

In accordance with another aspect of the invention, a method for manufacturing a biodegradable material for advertisement includes: forming a surface film layer; coating a pressure-sensitive adhesive layer onto a release layer; and combining the pressure-sensitive adhesive layer-coated release layer and the surface film layer.

Next, respective layers constituting a biodegradable material for advertisement according to an exemplary embodiment of the invention will be described with reference to the accompanying drawings.

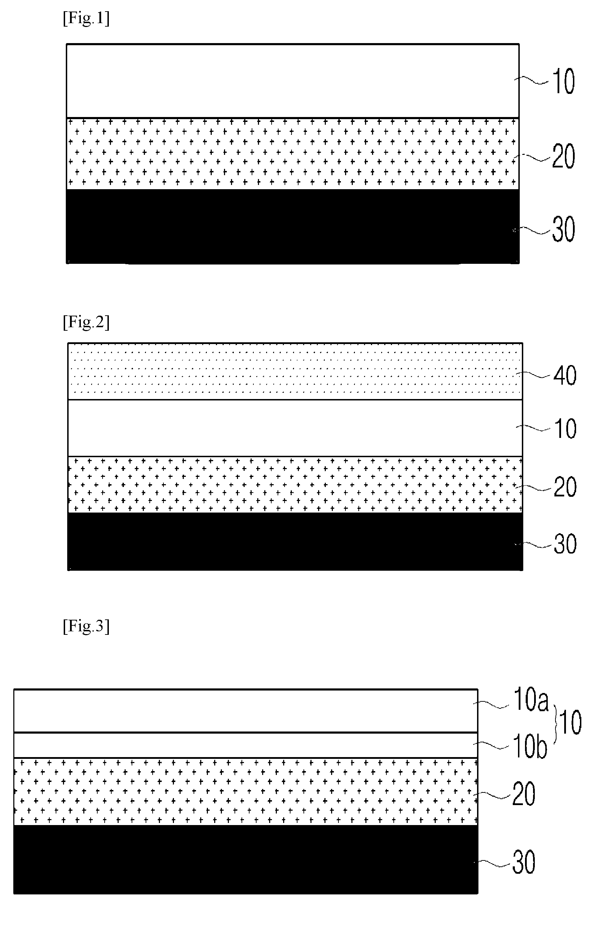

Fig. 1 shows a biodegradable material for advertisement according to an exemplary embodiment, which includes a surface film layer 10, a pressure-sensitive adhesive layer 20 and a release layer 30 stacked in sequence, and may further include a surface treatment layer 40 on the surface film layer 10, as needed (refer to Fig. 2).

The surface film layer is a biodegradable film layer containing 5 to 40 wt% of a poly(lactic acid) polymer and 95 to 60 wt% of an aliphatic polyester resin. The poly(lactic acid) polymer is a transparent poly(lactic acid) (PLA) resin having a specific gravity of 1 to 2 and a melting point of 100 to 150°C.

The aliphatic polyester resin includes at least one selected from the group consisting of polyhydroxybutyrate (PHB), polyhydroxyalkanoate (PHA), polycaprolactone (PCL), poly(lactic acid) (PLA), polybutylene adipate terephthalate (PBAT), cellulose, chitin, and copolymers thereof. In particular, copolymers of a poly(lactic acid) polymer and polybutylene adipate terephthalate (PBAT) may be used to secure film flexibility.

In general, decomposition of a polymer refers to change of physical properties of the polymer due to chemical reaction of a polymer main chain. Here, factors causing change of the physical and chemical properties of the polymer include heat, light, microbial metabolism, etc. Here, a polymer capable of being mixed with or decomposed by microorganisms or light is generally called a biodegradable polymer. To secure flexibility of the film to be used as the biodegradable material for advertisement, a compound prepared by mixing poly(lactic acid) (PLA) and polybutylene adipate terephthalate (PBAT) may be used.

For example, a biodegradable resin prepared by mixing the poly(lactic acid) polymer and the aliphatic polyester resin is subjected to sheeting in an extruder to form a biodegradable film layer for the surface film layer according to the exemplary embodiment.

The biodegradable film layer according to the embodiment includes at least one kind of opacity improving material selected from the group consisting of titanium dioxide (TiO₂), calcium carbonate (CaCO₃), talc, barium sulfate (BaSO₄), and calcium silicate (CaSiO₃) to secure opacity. The opacity improving material may be present in an amount of 10 to 40 parts by weight with respect to 100 parts by weight of the biodegradable resin constituting the biodegradable film layer.

Further, the biodegradable film layer according to the embodiment may include two or more layers 10a, 10b having colors, as shown in Fig. 3. Although the biodegradable film layer includes two or more layers, the total thickness of the biodegradable film layer may be the same as the thickness of the biodegradable film layer which is formed of a single layer.

As such, at least one kind of pigment selected from the group consisting of titanium dioxide (TiO₂), calcium carbonate (CaCO₃), talc, carbon black, barium sulfate (BaSO₄), and calcium silicate (CaSiO₃) may be used as a pigment for the biodegradable film layer. The pigment may be added in an amount of 20 parts by weight or less with respect to 100 parts by weight of the resin constituting the biodegradable film layer.

The biodegradable film layer may have a thickness of 50 to 200µm. More specifically, the biodegradable film layer may have a thickness of 7 to 150µm.

In detail, as shown in Fig. 3, pigments for respective colors are added to the biodegradable resin including the poly(lactic acid) polymer and the aliphatic polyester, and two layers of a white biodegradable film layer 10a and a gray biodegradable film layer 10b are then formed to a single biodegradable film layer 10 in a co-extruder. Here, the white biodegradable film layer 10a may be thickly formed in a main extruder, and the gray biodegradable film layer 10b may be thinly formed in a sub extruder, thereby providing a single film having a total thickness of 50 to 200µm. The thickness of the film formed in the sub extruder may be 10 to 30% that of the film formed in the main extruder.

According to the embodiment of the invention, the biodegradable film layer has soil-based biodegradability of 60% or more as compared with cellulose within six months when discarded, so that a toxic environmental hormone due to polyvinylchloride (PVC) is not emitted, and the environment is protected, thereby being very friendly toward humans and the earth.

### Pressure-sensitive adhesive layer

The biodegradable material for advertisement according to the exemplary embodiment includes an oily or aqueous acrylic adhesive coated on the rear of the biodegradable film layer. The biodegradable material for advertisement employs the oily or aqueous acrylic adhesive to attach the biodegradable film layer to various objects. Examples of oily or aqueous acrylic adhesives include ethylhexyl acrylate, vinyl acrylate, and acrylic acid, without being limited thereto.

At least one kind of opacity improving material selected from the group consisting of white, black and gray pigments may be added to the pressure-sensitive adhesive layer to secure opacity as needed. In this embodiment, the pressure-sensitive adhesive layer may have a thickness of 10 to 50µm. More specifically, the pressure-sensitive adhesive layer may have a thickness of 20 to 30µm.

### Release layer

The biodegradable material for advertisement according to the exemplary embodiment includes the release layer on the back of the pressure-sensitive adhesive layer. The release layer is attached thereto in order to prevent the pressure-sensitive adhesive layer from being bonded to the biodegradable film when the biodegradable film is wound in the form of a roll. The release layer is removed when the biodegradable material is finally attached to an object.

Thus, the release layer needs proper releasability since it must be well attached to the adhesive during storage but well ripped off when removed for use. Further, the release layer prevents the product from curling, the curling of which may be varied depending on thickness.

In this exemplary embodiment, the release layer is prepared by applying a silicone resin on to a paper sheet or a polyester base film, and may have a thickness of 50 to 200µm. More specifically, the release layer may have a thickness of 80 to 150µm.

### Surface treatment layer

The biodegradable material for advertisement according to the exemplary embodiment includes may further include a surface processing layer coated on the surface film layer, thereby enhancing printability upon digital printing.

During digital printing, bio ink, oily ink, aqueous ink, etc. are generally used. When using the oily ink, the biodegradable film layer exhibits some degree of printability. However, when using the bio ink and the aqueous ink, it is desirable that the biodegradable material include the surface treatment layer.

The surface treatment layer uses polyvinylchloride (PVC) or an acrylic oily or aqueous treatment agent. To enhance printability, a gravure roll is used to achieve a thickness of 1 to 10µm. More specifically, the surface treatment layer may have a thickness of 2 to 5µm.

Next, a method for manufacturing the biodegradable material for advertisement according to the exemplary embodiment will be described. First, a biodegradable resin containing a poly(lactic acid) polymer and an aliphatic polyester is subjected to sheeting in an extruder, thereby forming a biodegradable film layer for a surface film layer of the biodegradable material according to this exemplary embodiment. The biodegradable film layer may be composed of a single layer, as shown in Fig. 1. Alternatively, the biodegradable film layer may be composed of two or more layers having different colors, as shown in Fig. 3.

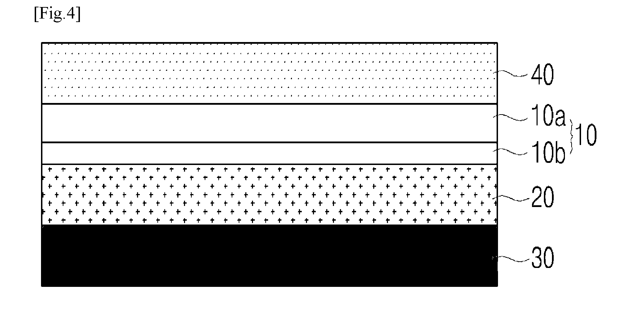

Referring to Figs. 3 and 4, if the biodegradable film layer includes two or more layers, a transparent white biodegradable film layer 10a is thickly formed in a main extruder, and a gray biodegradable film layer 10b is thinly formed in a sub extruder, thereby forming one film unit having a total thickness of 50 to 200µm. Generally, the thickness of the film formed by the sub extruder may be 10 to 30% that of the film formed by the main extruder.

Then, a pressure-sensitive adhesive layer is coated on a release layer, which is formed by applying a silicone resin to a paper sheet or a polyester base film.

Then, the biodegradable film layer is combined with the pressure-sensitive adhesive layer-coated release layer, thereby providing a material for advertisement, in which the surface film layer 10 of the biodegradable film layer, the pressure-sensitive adhesive layer 20, and the release layer 30 are stacked in sequence.

Optionally, a surface treatment layer 40 may be provided on the surface film layer 10 of the biodegradable film layer. Here, the surface treatment agent layer includes polyvinylchloride (PVC) or an acrylic oily or aqueous treatment agent.

When the biodegradable film layer is composed of a single layer and includes the surface treatment layer, the biodegradable film layer may be formed, as shown in Fig. 2. When the biodegradable film layer 10 is composed of the transparent white biodegradable film layer 10a and the gray biodegradable film layer 10b and includes the surface treatment layer, the biodegradable film layer may have a structure as shown in Fig. 4.

Although some embodiments have been described herein, it should be understood by those skilled in the art that these embodiments are given by way of illustration only, and that various modifications, variations, and alterations can be made without departing from the spirit and scope of the invention. Therefore, the scope of the invention should be limited only by the accompanying claims and equivalents thereof.

## Claims

1. A material for advertisement, comprising: a surface film layer, a pressure-sensitive adhesive layer, and a release layer stacked in sequence, wherein the surface film layer comprises a biodegradable film layer containing 5 to 40 wt% of a poly(lactic acid) polymer and 95 to 60 wt% of an aliphatic polyester.

2. The material of claim 1, wherein the poly(lactic acid) polymer is a transparent poly(lactic acid) (PLA) resin having a specific gravity of 1 to 2 and a melting point of 100 to 150°C.

3. The material of claim 1, wherein the aliphatic polyester comprises at least one selected from the group consisting of polyhydroxybutyrate (PHB), polyhydroxyalkanoate (PHA), polycaprolactone (PCL), and polybutylene adipate terephthalate (PBAT).

4. The material of claim 1, wherein the biodegradable film layer has a thickness of 50 to 200µm.

5. The material of claim 1, wherein the biodegradable film layer comprises one or more kinds of opacity improving material selected from the group consisting of titanium dioxide (TiO₂), calcium carbonate (CaCO₃), talc, barium sulfate (BaSO₄), and calcium silicate (CaSiO₃).

6. The material of claim 1, wherein the biodegradable film layer comprises two or more layers having different colors.

7. The material of claim 6, wherein the biodegradable film layer comprises at least one pigment selected from the group consisting of titanium dioxide (TiO₂), calcium carbonate (CaCO₃), talc, carbon black, barium sulfate (BaSO₄), and calcium silicate (CaSiO₃).

8. The material of claim 1, further comprising: a surface treatment layer on the biodegradable film layer.

9. The material of claim 8, wherein the surface treatment layer comprises at least one selected from the group consisting of acrylic resins and fluorine resins.

10. The material of claim 1, wherein the pressure-sensitive adhesive layer has a thickness of 10 to 50µm and comprises an acrylic oily or aqueous adhesive.

11. The material of claim 1, wherein the pressure-sensitive adhesive layer comprises at least one opacity improving material selected from the group consisting of white, black and gray pigments.

12. The material of claim 1, wherein the release layer is formed by applying a silicone resin to a paper sheet or a polyester base film.

13. A method for manufacturing the material of claim 1, comprising:
forming a surface film layer;
coating a pressure-sensitive adhesive layer onto a release layer; and
combining the pressure-sensitive adhesive layer-coated release layer and the surface film layer.

14. The method according to claim 13, wherein the surface film layer comprises a biodegradable film layer containing 5 to 40 wt% of a poly(lactic acid) polymer and 95 to 60 wt% of an aliphatic polyester.

15. The method according to claim 13, further comprising: coating a surface treatment layer onto the surface film layer.
